# EUROPÄISCHE PATENTANMELDUNG

(11) **EP 1 170 963 A2**
(43) Veröffentlichungstag der Anmeldung: **09.01.2002**
(21) Anmeldenummer: 01113907.8
(22) Anmeldetag: 07.06.2001
(51) Int. Cl.: H04Q 3/62, H04M 7/00

(54) **Datenübertragung zwischen zwei Kommunikationsanlagen über ein paketorientiertes Kommunikationsnetz**

(30) Priorität: 03.07.2000 DE 10032244
(71) Anmelder: SIEMENS AKTIENGESELLSCHAFT, 80333 München (DE)
(72) Erfinder: Abel, Ulrich, 45329 Essen (DE); Hoppe, Martin, 59071 Hamm (DE)

(57) **Zusammenfassung**

Die beiden Kommunikationseinrichtungen (PBX-A, PBX-B) sind jeweils über eine Umsetzungseinrichtung (UE-A, UE-B) mit dem paket-orientierten Kommunikationsnetz (IP-KN) verbunden. Durch die Umsetzungseinrichtungen (UE-A, UE-B) erfolgt senderseitig eine Trennung von einer Verbindung zwischen den Kommunikationseinrichtungen (PBX-A, PBX-B) zugeordneten zeitschlitz-orientierten Signalisierungs- und Nutzinformationen. Die Signalisierungsinformationen werden nachfolgend transparent über eine erste Verbindung (SIG-V) über das paket-orientierten Kommunikationsnetz (IP-KN) übermittelt. Die Nutzinformationen werden für die Übermittlung über das paket-orientierte Kommunikationsnetz (IP-KN) in ein durch das paket-orientierte Kommunikationsnetz (IP-KN) unterstütztes Datenformat (IP) umgewandelt und nachfolgend über eine zweite Verbindung (ND-V) übermittelt. Abschließend werden die Nutzinformationen empfängerseitig rückgewandelt und mit den Signalisierungsinformationen zusammengefügt.

## Beschreibung

Verfahren und Anordnung für eine Datenübertragung zwischen zwei Kommunikationseinrichtungen über ein paket-orientiertes Kommunikationsnetz

Die Erfindung betrifft ein Verfahren und eine Anordnung zur netzweiten Bereitstellung von durch Kommunikationsanlagen unterstützten Leistungsmerkmalen über ein paket-orientiertes - insbesondere ein IP-(Internet Protokoll)-orientiertes - Kommunikationsnetz.

Aus der Produktschrift "Sonderausgabe telcom report und Siemens Magazin Com: ISDN im Büro - HICOM", Siemens AG, Berlin und München, 1985, insbesondere der Seiten 14 bis 31 ist eine für eine Informationsvermittlung, insbesondere Sprachdatenvermittlung ausgebildete Kommunikationsanlage bekannt, die eine Vielzahl von Leistungsmerkmalen, wie z.B. automatischer Rückruf, Anrufübernahme, Rufumleitung, usw. unterstützt. Des weiteren ist es aus der Produktschrift der Firma Siemens AG "HICOM 300 Networking", 1991, Bestellnummer A31001-W-A30 bekannt, Kommunikationsanlagen zu einem - in der Regel privaten - Kommunikationsnetz zusammenzuschalten und lokal an einer Kommunikationsanlage verfügbare Leistungsmerkmale netzweit zur Verfügung zu stellen.

Eine Verbindung der Kommunikationsanlagen untereinander erfolgt dabei in der Regel über proprietäre oder standardisierte zeitschlitz-orientierte Schnittstellen, wie z.B. eine ISDN-orientierte S₀- oder S₂ₘ-Schnittstelle. Demzufolge werden für die Signalisierung der Leistungsmerkmale zwischen den Kommunikationsanlagen proprietäre Signalisierungsprotolle oder standardisierte Signalisierungsprotolle, wie beispielsweise QSIG (Q-Interface Signalling Protocol) oder das ISDN-orientierte Signalisierungsprotokoll DSS1 (Digital Subscriber System No.1) verwendet.

In modernen Kommunikationssystemen sind Kommunikationsanlagen zunehmend über Rechnernetze - z.B. ein LAN (Local Area Network) - miteinander verbunden. Eine Datenübertragung über diese Rechnernetze erfolgt dabei in der Regel gemäß dem bekannten paket-orientierten IP-Protokoll (Internet Protokoll). Ein bekannter auf dem IP-Protokoll basierender Standard zur Übermittlung von Sprach-, Daten- und Videokommunikation ist das durch die ITU-T (International Telecommunication Union - Telecommunications) standardisierte Protokoll H.323.

Für eine netzweite Bereitstellung der durch eine Kommunikationsanlage unterstützten Leistungsmerkmale über ein Rechnernetz ist es somit notwendig die bestehenden auf einer zeitschlitz-orientierten Datenübertragung basierenden Signalisierungsprotokolle für eine paket-orientierte Datenübertragung umzusetzen. Eine derartige Umsetzung erfolgt in der Regel durch spezielle Umsetzungseinrichtungen - in der Literatur häufig als 'Gateways' bezeichnet -, die jedoch an das jeweilige von einer Kommunikationsanlage verwendete Signalisierungsprotokoll speziell angepaßt und bei jeder Erweiterung des Signalisierungsprotokolls aktualisiert werden müssen. Zudem sind im IP-Protokoll bzw. im H.323-Protokoll nur eine begrenzte Anzahl von Leistungsmerkmalen definiert, so daß eine netzweite Bereitstellung aller durch eine Kommunikationsanlage lokal unterstützten Leistungsmerkmale über ein diese Protokolle unterstützendes Rechnernetz nicht möglich ist.

Der vorliegenden Erfindung liegt die Aufgabe zugrunde, Maßnahmen anzugeben, durch welche eine netzweite Bereitstellung von durch eine Kommunikationsanlage lokal zur Verfügung gestellten Leistungsmerkmalen über ein Rechnernetz ermöglicht wird.

Die Lösung dieser Aufgabe erfolgt erfindungsgemäß mit den Merkmalen des Patentanspruchs 1 bzw. 7.

Ein wesentlicher Vorteil des erfindungsgemäßen Verfahrens bzw. der erfindungsgemäßen Anordnung besteht darin, daß durch eine separate transparente Übermittlung von Signalisierungsinformationen über das Rechnernetz alle durch eine Telekommunikationsanlage unterstützten Leistungsmerkmale netzweit zur Verfügung gestellt werden können und daß eine Anpassung der Umsetzungseinrichtung an das aktuell verwendete Signalisierungsprotokoll nicht mehr notwendig ist.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch die Verwendung einer gemeinsamen Signalisierungsverbindung für mehrere Nutzdatenverbindungen die für die Signalisierung benötigten Anlagen- und Netzressourcen gering gehalten werden können.

Ein weiterer Vorteil von in den Unteransprüchen definierten Ausgestaltungen der Erfindung besteht darin, daß durch die Verwendung einer den unterschiedlichen virtuellen Anschlußports einer Umsetzungseinrichtung eindeutig zugeordneten jeweiligen Identifizierung ein empfängerseitiges Zusammenfügen bzw. Synchronisieren der über das Rechnernetz getrennt übermittelten Signalisierungs- und Nutzinformationen auf einfache Weise möglich ist.

Ein Ausführungsbeispiel der Erfindung wird im folgenden anhand der Zeichnung näher erläutert.

Dabei zeigen:
- Fig. 1:: ein Strukturbild zur schematischen Darstellung der wesentlichen Funktionseinheiten der erfindungsgemäßen Anordnung; und
- Fig. 2:: ein Ablaufdiagramm zur Veranschaulichung der bei einem Verbindungsaufbau gemäß dem erfindungsgemäßen Verfahren zwischen den Funktionseinheiten zu übermittelnden wesentlichen Meldungen.

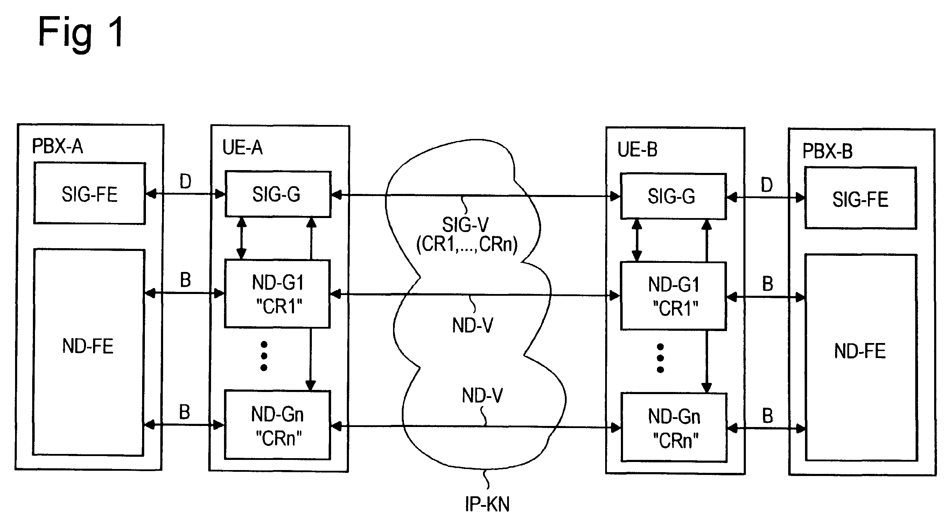

Fig. 1 zeigt ein Strukturbild zur schematischen Darstellung einer ersten Kommunikationsanlage PBX-A und einer zweiten Kommunikationsanlage PBX-B die jeweils über eine Umsetzungseinrichtung UE-A, UE-B - in der Literatur häufig als 'Gateway' bezeichnet - mit einem Rechnernetz IP-KN verbunden sind. Sowohl die erste als auch die zweite Kommunikationsanlage PBX-A, PBX-B weisen eine die Signalisierung der Kommunikationsanlage PBX-A, PBX-B steuernde Funktionseinheit SIG-FE - beispielsweise eine zentrale Steuereinheit - und eine die Nutzdatenübertragung der Kommunikationsanlage PBX-A, PBX-B steuernde Funktionseinheit ND-FE - beispielsweise ein Koppelfeld - auf.

Die die Signalisierung der Kommunikationsanlage PBX-A, PBX-B steuernde Funktionseinheit SIG-FE ist jeweils über eine Signalisierungsverbindung D - beispielsweise bestehend aus einem oder mehreren ISDN-orientierten D-Kanälen - mit einem Signalisierungs-Gateway SIG-G der jeweiligen Umsetzungseinrichtung UE-A, UE-B verbunden. Die die Nutzdatenübertragung der Kommunikationsanlage PBX-A, PBX-B steuernde Funktionseinheit ND-FE ist jeweils über n Nutzdatenverbindungen B - beispielsweise jeweils ein oder mehrere ISDN-orientierte B-Kanäle - mit n virtuellen Nutzdaten-Gateways ND-G1,...,ND-Gn der jeweiligen Umsetzungseinrichtung UE-A, UE-B verbunden. Für eine Adressierung der virtuellen Nutzdaten-Gateways ND-G1,...,ND-GN ist diesen jeweils eine für die jeweilige Umsetzungseinrichtung UE-A, UE-B eindeutige Identifizierung CR1,...,CRn (in Anführungszeichen dargestellt) zugeordnet.

Die im Rahmen einer Verbindung zwischen der ersten und der zweiten Kommunikationsanlage PBX-A, PBX-B zu übermittelnden Signalisierungs- und Nutzinformationen werden erfindungsgemäß über getrennte Verbindungen über das Rechnernetz IP-KN übertragen. Die zu übermittelnden Signalisierungsinformationen werden dabei über eine Signalisierungsverbindung SIG-V zwischen den Signalisierungs-Gateways SIG-G der ersten und der zweiten Umsetzungseinrichtung UE-A, UE-B übertragen. Die Nutzinformationen werden über eine Nutzdatenverbindung ND-V zwischen den Nutzdaten-Gateways ND-G1,...,ND-Gn der ersten und der zweiten Umsetzungseinrichtung UE-A, UE-B übertragen. Hierbei werden unterschiedlichen Nutzdatenverbindungen ND-V zugeordnete Signalisierungsinformationen gemeinsam über die Signalisierungsverbindung SIG-V - durch das in Klammer gesetzte CR1,...,CRn veranschaulicht - übermittelt.

Eine Übermittlung der Nutzinformationen über die Nutzdatenverbindung ND-V erfolgt dabei gemäß dem durch das Rechnernetz IP-KN unterstütze Übertragungsprotokoll. Beispielsweise kann eine Übermittlung von Sprachdaten gemäß dem bekannten H.323-Protokoll erfolgen. Die Nutzinformationen werden hierfür durch den jeweiligen Nutzdaten-Gateway ND-G1,...,ND-Gn senderseitig von dem durch die Kommunikationsanlage PBX-A, PBX-B unterstützten zeitschlitz-orientierten - beispielsweise dem ISDN-orientierten - Datenformat in das durch das Rechnernetz IP-KN unterstützte paket-orientierte - beispielsweise das H.323-orientierte - Datenformat umgewandelt und über das Rechnernetz IP-KN übermittelt. Empfängerseitig werden die gemäß dem H.323-Datenformat ausgestalteten Nutzinformationen in dem entsprechenden Nutzdaten-Gateway ND-G1,...,ND-Gn in das von der Kommunikationsanlage PBX-A, PBX-B unterstützte zeitschlitz-orientierte Datenformat zurückgewandelt und an die Kommunikationsanlage PBX-A, PBX-B übermittelt. Im Gegensatz zu den Nutzinformationen werden die Signalisierungsinformationen transparent über die Signalisierungsverbindung SIG-V übertragen. In der Literatur wird in diesem Zusammenhang häufig davon gesprochen, daß die Signalisierungsinformationen durch das IP-Protokoll "getunnelt" übertragen werden.

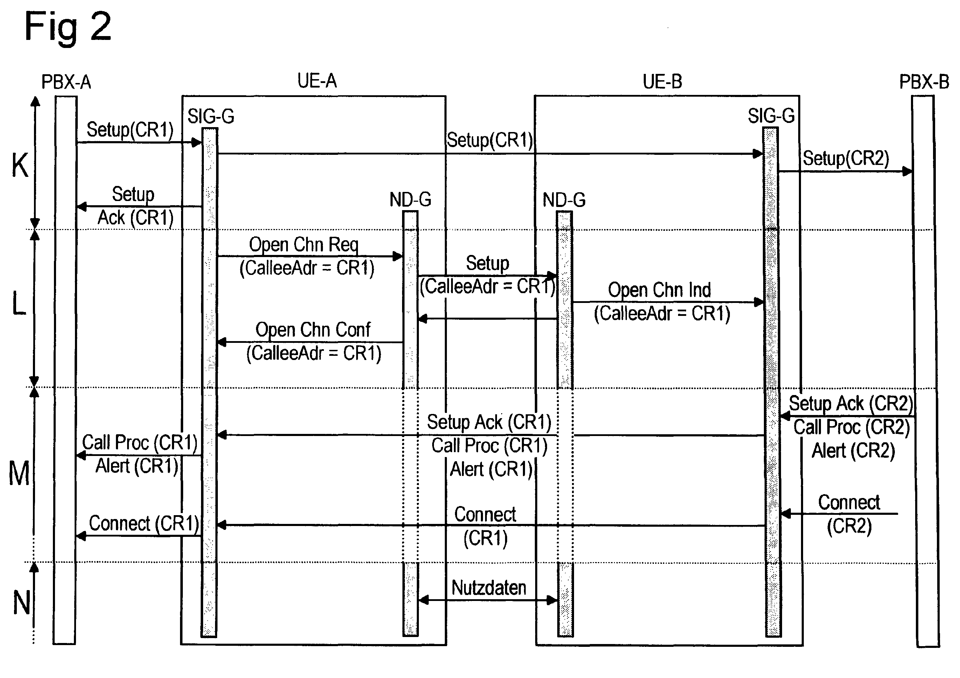

Fig. 2 zeigt nun ein Ablaufdiagramm zur Veranschaulichung der bei einem Verbindungsaufbau von der ersten Kommunikationsanlage PBX-A mit der zweiten Kommunikationsanlage PBX-B gemäß dem erfindungsgemäßen Verfahren zu übermittelnden wesentlichen Meldungen.

In einer ersten - in der Figur mit K gekennzeichneten - Phase wird der Verbindungsaufbau von der ersten Kommunikationsanlage PBX-A zur zweiten Kommunikationsanlage PBX-B - beispielsweise durch eine an der ersten Kommunikationsanlage PBX-A eingegebenen Rufnummer - initialisiert. Hierzu wird eine eine Identifizierung CR1 enthaltende Verbindungsaufbaumeldung 'Setup(CR1)' von der ersten Kommunikationsanlage PBX-A an den Signalisierungs-Gateway SIG-G der ersten Umsetzungseinrichtung UE-A übermittelt. Die Identifizierung CR1 wird der Verbindungsaufbaumeldung 'Setup(CR1)' dabei durch die erste Kommunikationsanlage PBX-A dynamisch zugeordnet, d.h. es wird beispielsweise durch die erste Kommunikationsanlage PBX-A die erste freie Identifizierung CR1,...,CRn ausgewählt und der Verbindungsaufbaumeldung 'Setup(CR1)' zugeordnet.

In einem nächsten Schritt wird durch die erste Umsetzungseinrichtung UE-A die der zweiten Umsetzungseinrichtung UE-B im IP-orientierten Kommunikationsnetz IP-KN zugeordnete Netzwerkadresse - beispielsweise eine IP-Adresse - ermittelt. Mittels der ermittelten Netzwerkadresse wird eine zweite, ebenfalls die Identifizierung CR1 enthaltene Verbindungsaufbaumeldung 'Setup(CR1)' von dem Signalisierungs-Gateway SIG-G der ersten Umsetzungseinrichtung UE-A über das Rechnernetz IP-KN an den Signalisierungs-Gateway SIG-G der zweiten Umsetzungseinrichtung UE-B übermittelt. Eine Ermittlung der Netzwerkadresse kann dabei durch eine in der ersten Umsetzungseinrichtung UE-A hinterlegte - nicht dargestellte - Tabelle erfolgen, in der der Rufnummer der zweiten Kommunikationsanlage PBX-B die Netzwerkadresse der zweiten Umsetzungseinrichtung UE-B zugeordnet gespeichert ist. Alternativ kann die Netzwerkadresse durch eine externe, an die erste Umsetzungseinrichtung UE-A oder die erste Kommunikationsanlage PBX-A angeschlossene Datenverarbeitungseinrichtung - in der Literatur häufig als 'Call Address Resolution Server' bezeichnet - ermittelt werden. Nachfolgend wird durch den Signalisierungs-Gateway SIG-G der ersten Umsetzungseinrichtung UE-A eine die Verbindungsaufbaumeldung 'Setup(CR1)' bestätigende Antwortmeldung 'Setup Ack (CR1)' an die erste Kommunikationsanlage PBX-A übermittelt.

Durch den Signalisierungs-Gateway SIG-G der zweiten Umsetzungseinrichtung UE-B wird aufgrund der empfangenen zweiten Verbindungsaufbaumeldung 'Setup(CR1)' eine dritte Verbindungsaufbaumeldung 'Setup(CR2)' an die zweite Kommunikationsanlage PBX-B übermittelt. Die in der dritten Verbindungsaufbaumeldung 'Setup (CR2)' enthaltene Identifizierung CR2 wird der dritten Verbindungsaufbaumeldung 'Setup(CR2)' wiederum dynamisch zugeordnet, d.h. es wird die erste freie Identifizierung CR1,...,CRn durch die zweite Umsetzungseinrichtung UE-B ausgewählt und der dritten Verbindungsaufbaumeldung 'Setup(CR2)' zugeordnet.

In einer zweiten - in der Figur mit L gekennzeichneten - Phase wird der Aufbau einer Nutzdatenverbindung ND-V - insbesondere einer auf dem H.323-Protokoll basierenden Verbindung zur Übermittlung von Sprachdaten - von der ersten Kommunikationsanlage PBX-A zur zweiten Kommunikationsanlage PBX-B initialisiert. Hierzu wird in der ersten Umsetzungseinrichtung UE-A ausgehend vom Signalisierungs-Gateway SIG-G eine Kanalanforderungsnachricht 'Open Chn Req (CalleeAdr = CR1)' an den entsprechenden Nutzdaten-Gateway ND-G übermittelt. Der in der Kanalanforderungsnachricht 'Open Chn Req (CalleeAdr = CR1)' mitübermittelte Parameter CalleeAdr ist ein im H.323-Protokoll definierter meldungsinterner Parameter und dient in diesem Zusammenhang als Rufzieladresse. Für eine nachfolgende Synchronisierung der Nutzdatenverbindung ND-V mit den entsprechenden über die Signalisierungsverbindung SIG-V übermittelten Signalisierungsinformationen ist der Parameter CalleeAdr erfindungsgemäß mit der bereits in der Verbindungsaufbaumeldung 'Setup (CR1)' enthaltenen Identifizierung CR1 belegt.

In einem nächsten Schritt wird durch die erste Umsetzungseinrichtung UE-A die dem entsprechenden Nutzdaten-Gateway ND-G der zweiten Umsetzungseinrichtung UE-B im Rechnernetz IP-KN zugeordnete Netzwerkadresse ermittelt. Mittels der ermittelten Netzwerkadresse wird eine entsprechende Verbindungsaufbaumeldung 'Setup (CalleeAdr = CR1)' vom Nutzdaten-Gateway ND-G der ersten Umsetzungseinrichtung UE-A über das Rechnernetz IP-KN an den entsprechenden Nutzdaten-Gateway ND-G der zweiten Umsetzungseinrichtung UE-B übermittelt. Eine Ermittlung der Netzwerkadresse kann dabei wiederum durch eine in der ersten Umsetzungseinrichtung UE-A hinterlegte - nicht dargestellte - Tabelle erfolgen, in der eine der Identifizierung CR1 zugeordnete Netzwerkadresse gespeichert ist. Alternativ kann die Netzwerkadresse wiederum durch eine externe Datenverarbeitungseinrichtung ermittelt werden.

Nachfolgend wird durch den Nutzdaten-Gateway ND-G der zweiten Umsetzungseinrichtung UE-B eine den Aufbau der Nutzdatenverbindung ND-V anzeigende Meldung 'Open Chn Ind (CalleeAdr = CR1)' an den Signalisierungs-Gateway SIG-G der zweiten Umsetzungseinrichtung UE-B übermittelt. Zusätzlich wird eine die Verbindungsaufbaumeldung 'Setup (CalleeAdr = CR1)' bestätigende Antwortmeldung an den Nutzdaten-Gateway ND-G der ersten Umsetzungseinrichtung UE-A zurückübermittelt, der daraufhin eine Kanalanforderungs-Bestätigungsnachricht 'Open Chn Conf (CalleeAdr = CR1)' an den Signalisierungs-Gateway SIG-G der ersten Umsetzungseinrichtung UE-A sendet.

Während einer dritten - in der Figur mit M gekennzeichneten - Phase besteht eine Signalisierungsverbindung SIG-V für eine transparente Übermittlung von Signalisierungsinformationen zwischen den Signalisierungs-Gateways SIG-G der ersten und der zweiten Umsetzungseinrichtung UE-A, UE-B. Eine am Signalisierungs-Gateway SIG-G der zweiten Umsetzungseinrichtung UE-B empfangene Meldung wird durch den Signalisierungs-Gateway SIG-G entsprechend umgesetzt und über die Signalisierungsverbindung SIG-V an den Signalisierungs-Gateway SIG-G der ersten Umsetzungseinrichtung UE-A übermittelt. Der Signalisierungs-Gateway SIG-G der ersten Umsetzungseinrichtung UE-A leitet daraufhin gegebenenfalls eine entsprechende Meldung an die erste Kommunikationsanlage PBX-A weiter. Beispielhaft ist eine die dritte Verbindungsaufbaumeldung 'Setup(CR2)' bestätigende Meldung 'Setup Ack (CR2)' dargestellt, die durch den Signalisierungs-Gateway SIG-G entsprechend umgesetzt wird und in Form der Meldung 'Setup Ack (CR1)' über die Signalisierungsverbindung SIG-V an den Signalisierungs-Gateway SIG-G der ersten Umsetzungseinrichtung UE-A übermittelt wird. Zusätzlich sind Verbindungsaufbaumeldungen 'Call Proc (CR2)' und 'Alert (CR2)' dargestellt, durch die signalisiert wird, daß an der zweiten Kommunikationsanlage PBX-B die für einen Rufaufbau notwendigen Informationen vollständig eingetroffen sind, bzw. daß an der zweiten Kommunikationsanlage PBX-B eine Rufsignalisierung erfolgt. Diese Verbindungsaufbaumeldungen werden durch den Signalisierungs-Gateway SIG-G der zweiten Umsetzungseinrichtung UE-B entsprechend umgesetzt, über die Signalisierungsverbindung SIG-V an den Signalisierungs-Gateway SIG-G der ersten Umsetzungseinrichtung UE-A übermittelt und durch diesen in Form der Verbindungsaufbaumeldungen 'Call Proc (CR1)' und 'Alert (CR1)' an die erste Kommunikationsanlage PBX-A weitergeleitet.

Des weiteren wird eine am Signalisierungs-Gateway SIG-G der zweiten Umsetzungseinrichtung UE-B empfangene, die Entgegennahme der Verbindung durch die zweite Kommunikationsanlage PBX-B anzeigende Verbindungsmeldung 'Connect (CR2)' durch den Signalisierungs-Gateway SIG-G entsprechend umgesetzt und in Form einer Verbindungsmeldung 'Connect (CR1)' über die Signalisierungsverbindung SIG-V an den Signalisierungs-Gateway SIG-G der ersten Umsetzungseinrichtung UE-A übermittelt. Der Signalisierungs-Gateway SIG-G der ersten Umsetzungseinrichtung UE-A leitet daraufhin eine entsprechende Verbindungsmeldung 'Connect (CR1)' an die erste Kommunikationsanlage PBX-A weiter.

Eine Übermittlung der Signalisierungsinformationen über die Signalisierungsverbindung SIG-V erfolgt dabei transparent, d.h. die Signalisierungsmeldungen werden über das IP-Protokoll getunnelt übertragen. Auf diese Weise können die durch eine der Kommunikationsanlagen PBX-A, PBX-B lokal zur Verfügung gestellten Leistungsmerkmale im Rechnernetz IP-KN netzweit zur Verfügung gestellt werden, da eine Umwandlung der zeitschlitz-orientierten Signalisierungsinformationen in das durch das Rechnernetz IP-KN unterstützte Protokoll entfallen kann. Auf diese Weise wird eine Unabhängigkeit von den durch das jeweilige paket-orientierte Protokoll - z.B. das H.323-Protokoll - unterstützten Leistungsmerkmalen erreicht.

Während einer vierten - in der Figur mit N gekennzeichneten - Phase besteht nun eine Nutzdatenverbindung ND-V für eine Übermittlung von Nutzinformationen zwischen den Nutzdaten-Gateways ND-G der ersten und der zweiten Umsetzungseinrichtung UE-A, UE-B. Hierbei werden die von einer der Kommunikationsanlagen PBX-A, PBX-B gesendeten und an einer der Umsetzungseinrichtungen UE-A, UE-B empfangene Nutzinformationen in das durch das Rechnernetz IP-KN unterstützte Datenformat - beispielsweise in das H.323-Datenformat - umgewandelt und nachfolgend über die Nutzdatenverbindung ND-V übermittelt. Durch die Verwendung von standardisierten Übertragungsprotokollen - wie z.B. dem H.323-Protokoll - für die Übermittlung der Nutzinformationen wird eine gesicherte Datenübermittlung gewährleistet.

In den Kommunikationsanlagen PBX-A, PBX-B ist empfängerseitig durch die Verwendung der Identifizierung CR1,...,CRn im Rahmen der Signalisierungsverbindung SIG-V und die Verwendung des zur Identifizierung CR1,...,CRn identischen Parameters CalleeAdr im Rahmen der Nutzdatenverbindung ND-V eine empfängerseitige Synchronisierung der Nutzdatenverbindung ND-V und der entsprechenden, über die Signalisierungsverbindung SIG-V übertragenen Signalisierungsinformationen auf einfache Weise möglich.

## Patentansprüche

1. Verfahren für eine Datenübertragung zwischen zwei Kommunikationseinrichtungen (PBX-A, PBX-B) über ein paket-orientiertes Kommunikationsnetz (IP-KN),
- bei dem senderseitig eine Trennung von einer Verbindung zugeordneten zeitschlitz-orientierten Signalisierungs- und Nutzinformationen erfolgt,
- bei dem eine erste Verbindung (SIG-V) für eine Übermittlung der Signalisierungsinformationen und eine zweite Verbindung (ND-V) für eine Übermittlung der Nutzinformationen eingerichtet wird,
- bei dem die Signalisierungsinformationen transparent über die erste Verbindung (SIG-V) übermittelt werden und die Nutzinformationen für eine Übermittlung über die zweite Verbindung (ND-V) in das durch das paket-orientierte Kommunikationsnetz (IP-KN) unterstützte Datenformat (IP) umgewandelt und nachfolgend übermittelt werden, und
- bei dem die Nutzinformationen empfängerseitig rückgewandelt und mit den Signalisierungsinformationen zusammengefügt werden.

2. Verfahren nach Anspruch 1,
**dadurch gekennzeichnet,**
**daß** für mehrere zweite Verbindungen (ND-V1,...,ND-Vn) nur eine den zweiten Verbindungen (ND-V1,...,ND-Vn) gemeinsame erste Verbindung (SIG-V) eingerichtet wird.

3. Verfahren nach Anspruch 1 oder 2,
**dadurch gekennzeichnet,**
**daß** das Zusammenfügen der Nutzinformationen und der Signalisierungsinformationen anhand eines über die erste Verbindung (SIG-V) und die zugeordnete zweite Verbindung (ND-V1,...,ND-Vn) übermittelte Identifizierung (CR1,...,CRn) erfolgt.

4. Verfahren nach Anspruch 3,
**dadurch gekennzeichnet,**
**daß** diejenigen Nutz- und Signalisierungsinformationen zusammengefügt werden, welche die gleichen Identifizierungen (CR1,...,CRn) aufweisen.

5. Verfahren nach Anspruch 3 oder 4,
**dadurch gekennzeichnet,**
**daß** durch die Identifizierung (CR1,...,CRn) ein virtueller Anschlußport einer den Anschluß der Kommunikationseinrichtung (PBX-A, PBX-B) an das paket-orientierte Kommunikationsnetz (IP-KN) realisierenden Umsetzungseinrichtung (UE-A, UE-B) identifiziert wird.

6. Verfahren nach einem der vorhergehenden Ansprüche,
**dadurch gekennzeichnet,**
**daß** die zweite Nutzdatenverbindung (ND-V1,...,ND-Vn) gemäß dem H.323-Protokoll aufgebaut wird.

7. Anordnung für eine Datenübertragung zwischen zwei Kommunikationseinrichtungen (PBX-A, PBX-B) über ein paket-orientiertes Kommunikationsnetz (IP-KN),
mit jeweils einer Umsetzungseinrichtung (UE-A, UE-B) zum Anschluß der Kommunikationseinrichtungen (PBX-A, PBX-B) an das paket-orientierte Kommunikationsnetz (IP-KN), wobei die Umsetzungseinrichtungen (UE-A, UE-B) derart ausgestaltet sind,
- daß senderseitig eine Trennung von einer Verbindung zwischen den Kommunikationseinrichtungen (PBX-A, PBX-B) zugeordneten zeitschlitz-orientierten Signalisierungs- und Nutzinformationen erfolgt,
- daß eine erste Verbindung (SIG-V) für eine Übermittlung der Signalisierungsinformationen und eine zweite Verbindung (ND-V) für eine Übermittlung der Nutzinformationen eingerichtet wird,
- daß die Signalisierungsinformationen transparent über die erste Verbindung (SIG-V) übermittelt werden und die Nutzinformationen für eine Übermittlung über die zweite Verbindung (ND-V) in das durch das paket-orientierte Kommunikationsnetz (IP-KN) unterstützte Datenformat (IP) umgewandelt und nachfolgend übermittelt werden, und
- daß die Nutzinformationen empfängerseitig rückgewandelt und mit den Signalisierungsinformationen zusammengefügt werden.

8. Anordnung nach Anspruch 7,
**dadurch gekennzeichnet,**
**daß** die Umsetzungseinrichtung (UE-A, UE-B) n virtuelle Anschlußports zur Verbindung mit dem IP-orientierten Kommunikationsnetz (IP-KN) aufweist, wobei jedem virtuellen Anschlußport eine eindeutige Identifizierung (CR1,...,CRn) zugeordnet ist.

9. Anordnung nach Anspruch 7 oder 8,
**dadurch gekennzeichnet,**
**daß** der ersten und der zweiten Verbindung (SIV-V, ND-V) jeweils eine Identifizierung (CR1,...,CRn) zugeordnet ist, und
**daß** das Zusammenfügen der Nutzinformationen und der Signalisierungsinformationen anhand der jeweils zugeordneten Identifizierungen (CR1,...,CRn) erfolgt.
